# EUROPEAN PATENT SPECIFICATION

(11) **EP 3 626 555 B1**
(45) Date of publication and mention of the grant of the patent: **20.07.2022**
(21) Application number: 18195300.1
(22) Date of filing: 18.09.2018
(51) Int. Cl.: B60T 8/88, B62D 11/08

(54) **CONTROL ARCHITECTURE FOR ELECTRIFIED BRAKING AND ELECTRIFIED STEERING OF A VEHICLE**
STEUERUNGSARCHITEKTUR FÜR ELEKTRIFIZIERTES BREMSEN UND ELEKTRIFIZIERTES LENKEN EINES FAHRZEUGS
ARCHITECTURE DE COMMANDE POUR FREINAGE ET DIRECTION ÉLECTRIFIÉS D'UN VÉHICULE

(43) Date of publication of application: 25.03.2020
(73) Proprietor: KNORR-BREMSE Systeme für Nutzfahrzeuge GmbH, 80809 München (DE)
(72) Inventor: Rapp, Tamás, 8229 Csopak (HU); Németh, Huba, 1116 Budapest (HU); Kokrehel, Csaba, 1119 Budapest (HU)
(74) Representative: Kietzmann, Lutz

(56) References cited:
- WO-A1-2017/058707
- WO-A2-2004/098967
- DE-A1-102017 102 021
- US-A1- 2018 099 694

## Description

### FIELD OF THE INVENTION

The present invention relates to a control architecture for electrified braking and electrified steering of a vehicle, and a control method for a control architecture for electrified braking and electrified steering of a vehicle.

### BACKGROUND OF THE INVENTION

Today the control and/or actuation of many safety relevant systems (e.g. brake system, etc.) of commercial vehicles utilizes compressed air as a power supply. The redundancy of certain systems is required (e.g. brake system) both for control and also for power supply. Electrification of such vehicles is in progress, and as such requires a redesign of some vehicle system architecture and components. Due to electrification, many pneumatic units are going to be replaced by electrically controlled and/or powered ones. Beside electrification AD (Automated Driving) applications also set new requirements for vehicle systems, especially for safety relevant units. These applications makes necessary the provision of redundant systems, especially where the fall-back performance cannot be provided by a human driver.

DE20061010713 describes an electrical system for a vehicle with at least one safety-relevant load, which is provided with a primary system and a secondary system of the on-board electrical system.

DE102017102021 A1 describes a partially electric braking and steering device providing an higher level of fail safety.

However, there is a need to improve a means for braking and steering redundancy.

### SUMMARY OF THE INVENTION

Therefore, it would be advantageous to have an improved technology to provide for braking and steering redundancy.

The object of the present invention is solved with the subject matter of the independent claims, wherein further embodiments are incorporated in the dependent claims. It should be noted that the following described aspects of the invention apply also for the control architecture for electrified braking and electrified steering of a vehicle and the control method for a control architecture for electrified braking and electrified steering of a vehicle.

In a first aspect, there is provided a control architecture for electrified braking and electrified steering of a vehicle, the control architecture comprising:
- at least two energy supply units;
- a steering actuator;
- a steering controller; and
- two brake actuator units.

The steering actuator and steering controller are configured to be supplied with power from a first one of the at least two energy supply units. The two brake actuators are configured to be supplied with power from a second one of the at least two energy supply units. A first brake actuator is associated with a first wheel of the vehicle and a second brake actuator is associated with a second wheel of the vehicle, wherein first and second wheel are wheels of a same axle of the vehicle. Actuation of the first brake actuator and/or the second brake actuator is configured to perform a steering function for the vehicle.

In this manner, an electric control and power supply architecture is provided for brake and steering system redundancy, where control and power supplies for electrified brake and steering actuators are connected in a way that enables the brake system to be used as a backup for the steering.

In other words, if normal steering functionality fails, through the power supply for steering and/or the steering actuator or steering controller failing or malfunctioning, emergency steering functionality can be provided through the application of brakes to one wheel or two wheels using differential braking, via a separately powered braking system.

In an example, the first brake actuator and/or second brake actuator are configured to perform the steering function for the vehicle upon detection of a failure or malfunction in one of more of: the first one of the energy supply units; the steering actuator; and the steering controller.

In an example, the control architecture comprises at least one brake control unit. A first brake control unit of the at least one brake control unit is supplied with power from the second of the at least two energy supply units.

In an example, the first brake control unit is configured to control actuation of the first brake actuator and/or the second brake actuator to perform the steering function.

In a second aspect, there is provided a control method for a control architecture for electrified braking and electrified steering of a vehicle, the method comprising:
a) supplying a steering actuator and a steering controller with power from a first one of at least two energy supply units;
b) supplying two brake actuators with power from a second one of the at least two energy supply units, wherein a first brake actuator is associated with a first wheel of the vehicle and a second brake actuator is associated with a second wheel of the vehicle; and
d) actuating the first brake actuator and/or the second brake actuator to perform a steering function for the vehicle, wherein

the first brake actuator and second brake actuator are associated with the two wheels of a same axle of the vehicle.

In an example, the method comprises step c), detecting a failure or malfunction in one of more of: the first one of the energy supply units; the steering actuator; and the steering controller, and wherein step d) is performed after a failure or malfunction has been detected.

In an example, step b) comprises supplying a first brake control unit of at least one brake control unit with power from the second of the at least two energy supply units.

In an example, in step d), the first brake control unit controls actuation of the first brake actuator and/or the second brake actuator to perform the steering function.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of an example of a control architecture for electrified braking and electrified steering of a vehicle;
Fig. 2 shows a control method for a control architecture for electrified braking and electrified steering of a vehicle; and
Fig. 3 shows a redundancy architecture for electrified brake and steering actuators.

### DETAILED DESCRIPTION OF EMBODIMENTS

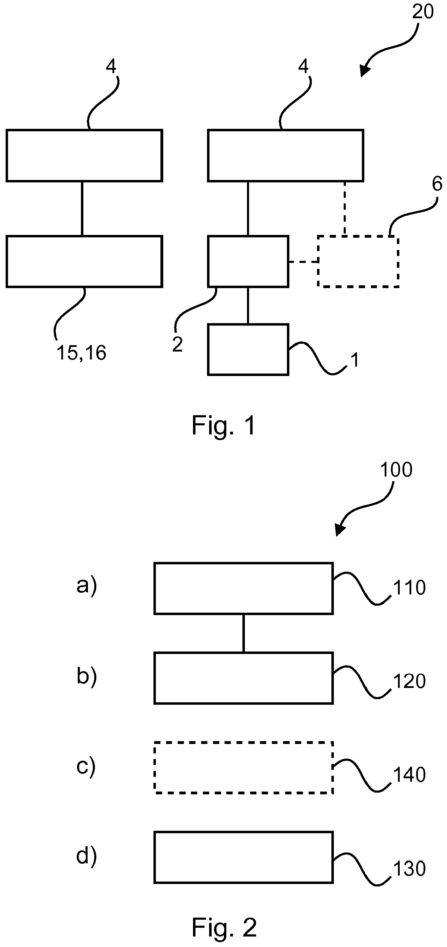

Fig. 1 shows an example of a control architecture 20 for electrified braking and electrified steering of a vehicle. The control architecture 20 comprises at least two energy supply units 4, a steering actuator 15, a steering controller 16, and two brake actuator units 2. The steering actuator and steering controller are configured to be supplied with power from a first one of the at least two energy supply units. The two brake actuators are configured to be supplied with power from a second one of the at least two energy supply units. A first brake actuator is associated with a first wheel 1 of the vehicle and a second brake actuator is associated with a second wheel of the vehicle 1. Actuation of the first brake actuator and/or the second brake actuator is configured to perform a steering function for the vehicle.

According to the invention, the first brake actuator and second brake actuator are associated with the two wheels of a same axle of the vehicle.

According to an example, the first brake actuator and/or second brake actuator are configured to perform the steering function for the vehicle upon detection of a failure or malfunction in one of more of: the first one of the energy supply units; the steering actuator; and the steering controller.

According to an example, the control architecture comprises at least one brake control unit 6. A first brake control unit of the at least one brake control unit is supplied with power from the second of the at least two energy supply units.

According to an example, the first brake control unit is configured to control actuation of the first brake actuator and/or the second brake actuator to perform the steering function.

Fig. 2 shows a control method 100 for a control architecture for electrified braking and electrified steering of a vehicle in its basic steps, where optional steps are shown dashed. The method 100 comprising:
in a supplying step 110, also referred to as step a), supplying a steering actuator 15 and a steering controller 16 with power from a first one of at least two energy supply units 4;
in a supplying step 120, also referred to as step b), supplying two brake actuators 2 with power from a second one of the at least two energy supply units, wherein a first brake actuator is associated with a first wheel of the vehicle and a second brake actuator is associated with a second wheel of the vehicle; and
in an actuating step 130, also referred to as step d), actuating the first brake actuator and/or the second brake actuator to perform a steering function for the vehicle.

According to the invention, the first brake actuator and second brake actuator are associated with the two wheels of a same axle of the vehicle.

According to an example, the method comprises step c), detecting 140 a failure or malfunction in one of more of: the first one of the energy supply units; the steering actuator; and the steering controller, and wherein step d) is performed after a failure or malfunction has been detected.

According to an example, the control architecture comprises at least one brake control unit 6, and wherein step b) comprises supplying a first brake control unit of the at least one brake control unit with power from the second of the at least two energy supply units.

According to an example, in step d), the first brake control unit controls actuation of the first brake actuator and/or the second brake actuator to perform the steering function.

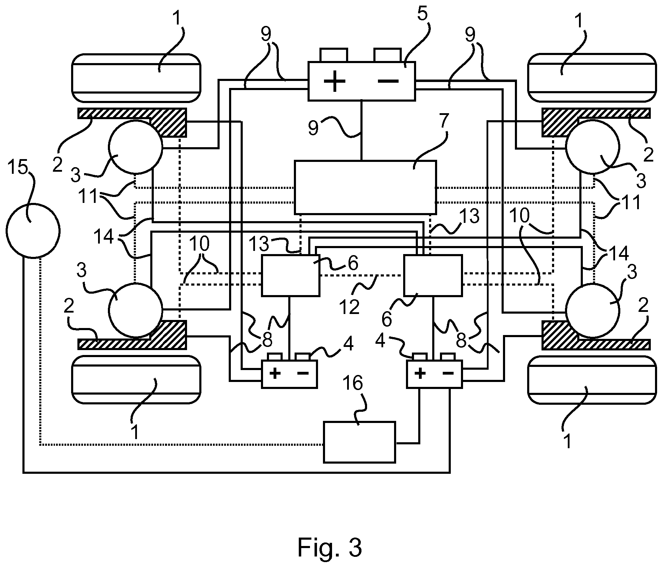

Fig. 3 shows a detailed example of a redundancy architecture for electrified brake and steering actuators. The architecture includes a redundant electric energy supply with at least two energy storages 4, and at least two vehicle dynamic control ECUs or brake control units 6. The steering is electrically controlled and actuated with a steering actuator 15 and a steering controller 16. The system uses electrified wheel brakes(s) supplied and controlled axle wise from the energy storages or energy storage units in the form of batteries 4 and the ECUs 6. In case of the system functioning without a malfunction, the steering function is carried out by the steering gear or actuator 15. However, in the situation when there has been a malfunction of the steering components 15 and 16, the steering function can be taken over by the brake actuators 2 using a differential braking. For this steer-by-brake function, a positive steering roll radius can be required. Therefore, in order that in the situation where the power supply or the vehicle dynamic ECU to which the steering components 15 and 16 are connected fail, the brake actuators that take over the steering function are supplied and commanded from another redundant circuit separate to that used for normal steering. Thus, in summary steering and braking redundancy is provided through the control and the power supply for the steering actuator being connected to a different circuit than the brake actuators of the steered axle.

While the invention has been illustrated and described in detail in the drawings and foregoing description, such illustration and description are to be considered illustrative or exemplary and not restrictive. The invention is not limited to the disclosed embodiments. Modifications can be made without departing from the scope of the invention as defined by the appended claims.

### LIST OF REFERENCE NUMBERS

- 1: - wheel
- 2 -: brake actuator unit
- 3 -: propulsion actuator unit
- 4 -: energy supply unit brake system
- 5 -: energy supply unit drive system
- 6 -: brake control unit
- 7 -: propulsion control unit
- 8 -: energy supply line brake system
- 9 -: energy supply line drive system
- 10 -: communication/control line brake system
- 11 -: communication/control line propulsion system
- 12 -: communication/control line between brake control units
- 13 -: communication/control line between brake and propulsion control units
- 14 -: communication/control line between brake and propulsion actuator units
- 15 -: steering actuator
- 16 -: steering controller
- 20 -: A control architecture for electrified braking and electrified steering of a vehicle;
- 100 -: A control method for a control architecture for electrified braking and electrified steering of a vehicle;
- 110 -: supplying a steering actuator and a steering controller with power from a first one of at least two energy supply units;
- 120 -: supplying two brake actuators with power from a second one of the at least two energy supply units; and
- 130 -: actuating the first brake actuator and/or the second brake actuator to perform a steering function for the vehicle.

## Claims

1. A control architecture (20) for electrified braking and electrified steering of a vehicle, the control architecture comprising:
- at least two energy supply units (4);
- a steering actuator (15);
- a steering controller (16); and
- two brake actuator units (2);
wherein, the steering actuator and steering controller are configured to be supplied with power from a first one of the at least two energy supply units;
wherein
the two brake actuators are configured to be supplied with power from a second one of the at least two energy supply units;
wherein a first brake actuator is associated with a first wheel (1) of the vehicle and a second brake actuator is associated with a second wheel of the vehicle (1); and
wherein, actuation of the first brake actuator and the second brake actuator is configured to perform a steering function for the vehicle, **characterised in that** the first brake actuator and second brake actuator are associated with the two wheels of a same axle of the vehicle.

2. Control architecture according to claim 1, wherein the first brake actuator and/or second brake actuator are configured to perform the steering function for the vehicle upon detection of a failure or malfunction in one of more of: the first one of the energy supply units; the steering actuator; and the steering controller.

3. Control architecture according to any of claims 1-2, wherein the control architecture comprises at least one brake control unit (6), wherein a first brake control unit of the at least one brake control unit is supplied with power from the second of the at least two energy supply units.

4. Control architecture according to claim 3, wherein the first brake control unit is configured to control actuation of the first brake actuator and/or the second brake actuator to perform the steering function.

5. A control method (100) for a control architecture for electrified braking and electrified steering of a vehicle, the method comprising:
a) supplying (110) a steering actuator (15) and a steering controller (16) with power from a first one of at least two energy supply units (4);
b) supplying (120) two brake actuators (2) with power from a second one of the at least two energy supply units, wherein a first brake actuator is associated with a first wheel (1) of the vehicle and a second brake actuator is associated with a second wheel (1) of the vehicle; and
d) actuating (130) the first brake actuator and the second brake actuator to perform a steering function for the vehicle, wherein the first brake actuator and second brake actuator are associated with the two wheels of a same axle of the vehicle.

6. Method according to claim 5, wherein the method comprises step c), detecting (140) a failure or malfunction in one of more of: the first one of the energy supply units; the steering actuator; and the steering controller, and wherein step d) is performed after a failure or malfunction has been detected.

7. Method according to any of claims 5-6, wherein the control architecture comprises at least one brake control unit (6), wherein step b) comprises supplying a first brake control unit of the at least one brake control unit with power from the second of the at least two energy supply units.

8. Method according to claim 7, wherein in step d), the first brake control unit controls actuation of the first brake actuator and/or the second brake actuator to perform the steering function.

## Patentansprüche

1. Steuerarchitektur (20) zum elektrifizierten Bremsen und elektrifizierten Lenken eines Fahrzeugs, wobei die Steuerarchitektur Folgendes umfasst:
- mindestens zwei Energieversorgungseinheiten (4);
- einen Lenkaktuator (15);
- eine Lenksteuerung (16); und
- zwei Bremsaktuatoreinheiten (2);
wobei der Lenkaktuator und die Lenksteuerung dazu eingerichtet sind, mit Leistung von einer ersten der mindestens zwei Energieversorgungseinheiten versorgt zu werden;
wobei
die zwei Bremsaktuatoren dazu eingerichtet sind, mit Leistung von einer zweiten der mindestens zwei Energieversorgungseinheiten versorgt zu werden;
wobei ein erster Bremsaktuator einem ersten Rad (1) des Fahrzeugs zugeordnet ist und ein zweiter Bremsaktuator einem zweiten Rad des Fahrzeugs (1) zugeordnet ist; und
wobei eine Betätigung des ersten Bremsaktuators und des zweiten Bremsaktuators dazu eingerichtet ist, eine Lenkfunktion für das Fahrzeug durchzuführen, **dadurch gekennzeichnet, dass** der erste Bremsaktuator und der zweite Bremsaktuator den zwei Rädern einer selben Achse des Fahrzeugs zugeordnet sind.

2. Steuerarchitektur nach Anspruch 1, wobei der erste Bremsaktuator und/oder der zweite Bremsaktuator dazu eingerichtet sind, die Lenkfunktion für das Fahrzeug bei Detektion eines Ausfalls oder einer Fehlfunktion in einem oder mehreren von Folgendem durchzuführen: der ersten der Energieversorgungseinheiten; dem Lenkaktuator; und der Lenksteuerung.

3. Steuerarchitektur nach einem der Ansprüche 1-2, wobei die Steuerarchitektur mindestens eine Bremssteuereinheit (6) umfasst, wobei eine erste Bremssteuereinheit der mindestens einen Bremssteuereinheit mit Leistung von der zweiten der mindestens zwei Energieversorgungseinheiten versorgt wird.

4. Steuerarchitektur nach Anspruch 3, wobei die erste Bremssteuereinheit dazu eingerichtet ist, eine Betätigung des ersten Bremsaktuators und/oder des zweiten Bremsaktuators zu steuern, um die Lenkfunktion durchzuführen.

5. Steuerverfahren (100) für eine Steuerarchitektur zum elektrifizierten Bremsen und elektrifizierten Lenken eines Fahrzeugs, wobei das Verfahren Folgendes umfasst:
a) Versorgen (110) eines Lenkaktuators (15) und einer Lenksteuerung (16) mit Leistung von einer ersten von mindestens zwei Energieversorgungseinheiten (4);
b) Versorgen (120) von zwei Bremsaktuatoren (2) mit Leistung von einer zweiten der mindestens zwei Energieversorgungseinheiten, wobei ein erster Bremsaktuator einem ersten Rad (1) des Fahrzeugs zugeordnet ist und ein zweiter Bremsaktuator einem zweiten Rad (1) des Fahrzeugs zugeordnet ist; und
d) Betätigen (130) des ersten Bremsaktuators und des zweiten Bremsaktuators, um eine Lenkfunktion für das Fahrzeug durchzuführen, wobei der erste Bremsaktuator und der zweite Bremsaktuator den zwei Rädern einer selben Achse des Fahrzeugs zugeordnet sind.

6. Verfahren nach Anspruch 5, wobei das Verfahren Schritt c), Detektieren (140) eines Ausfalls oder einer Fehlfunktion in einem oder mehreren von Folgendem umfasst: der ersten der Energieversorgungseinheiten; dem Lenkaktuator; und der Lenksteuerung, und wobei Schritt d) durchgeführt wird, nachdem ein Ausfall oder eine Fehlfunktion detektiert wurde.

7. Verfahren nach einem der Ansprüche 5-6, wobei die Steuerarchitektur mindestens eine Bremssteuereinheit (6) umfasst, wobei Schritt b) Versorgen einer ersten Bremssteuereinheit der mindestens einen Bremssteuereinheit mit Leistung von der zweiten der mindestens zwei Energieversorgungseinheiten umfasst.

8. Verfahren nach Anspruch 7, wobei in Schritt d) die erste Bremssteuereinheit eine Betätigung des ersten Bremsaktuators und/oder des zweiten Bremsaktuators steuert, um die Lenkfunktion durchzuführen.

## Revendications

1. Architecture (20) de commande du freinage électrifié de la direction électrifiée d'un véhicule, l'architecture de commande comprenant :
- au moins deux unités (4) d'alimentation en énergie ;
- un actionneur (15) de direction ;
- une unité (16) de commande de direction ; et
- deux unités (2) d'actionneur de frein ;
dans laquelle l'actionneur de direction et l'unité de commande de direction sont configurés pour être alimentés en puissance par une première des au moins deux unités d'alimentation en énergie ;
dans laquelle les actionneurs de frein sont configurés pour être alimentés en puissance par une deuxième des au moins deux unités d'alimentation en énergie ;
dans laquelle un premier actionneur de frein est associé à une première roue (1) du véhicule et un deuxième actionneur de frein est associé à une deuxième roue du véhicule (1) ; et
dans laquelle l'actionnement du premier actionneur de frein et du deuxième actionneur de frein est configuré pour effectuer une fonction de direction du véhicule, **caractérisés en ce que** le premier actionneur de frein et le deuxième actionneur de frein sont associés aux deux roues d'un même essieu du véhicule.

2. Architecture de commande suivant la revendication 1, dans laquelle le premier actionneur de frein et/ou le deuxième actionneur de frein sont configurés pour effectuer la fonction de direction du véhicule, après détection d'une défaillance ou d'un dysfonctionnement de l'une ou de plusieurs de : la première des unités d'alimentation en énergie ; l'actionneur de direction ; et l'unité de commande de direction.

3. Architecture de commande suivant l'une quelconque des revendications 1 à 2, dans laquelle l'architecture de commande comprend au moins une unité (6) de commande de frein, dans laquelle une première unité de commande de frein de la au moins une unité de commande de frein est alimentée en puissance par la deuxième des au moins deux unités d'alimentation en énergie.

4. Architecture de commande suivant la revendication 3, dans laquelle la première unité de commande de frein est configurée pour commander l'actionnement du premier actionneur de frein et/ou du deuxième actionneur de frein pour effectuer la fonction de direction.

5. Procédé (100) de commande d'une architecture de commande du freinage électrifié et de la direction électrifiée d'un véhicule, le procédé comprenant :
a) alimenter (110) un actionneur (15) de direction et une unité (16) de commande de direction en puissance provenant d'une première d'au moins deux unités (4) d'alimentation en énergie ;
b) alimenter (120) deux actionneurs (2) de frein en puissance provenant d'une deuxième des au moins deux unités d'alimentation en énergie, un premier actionneur de frein étant associé à une première roue (1) du véhicule et un deuxième de frein étant associé à une deuxième roue (1) du véhicule ; et
d) actionner (130) le premier actionneur de frein et le deuxième actionneur de frein pour effectuer une fonction de direction du véhicule, le premier actionneur de frein et le deuxième actionneur de frein étant associés aux deux roues d'un même essieu du véhicule.

6. Procédé suivant la revendication 5, dans lequel le procédé comprend un stade c) de détection (140) d'une défaillance ou d'un dysfonctionnement de l'un ou plusieurs de : la première des unités d'alimentation en énergie ; l'actionneur de direction ; et l'unité de commande de direction, et dans lequel on effectue le stade d), après avoir détecté une défaillance ou un dysfonctionnement.

7. Procédé suivant l'une des revendications 5 à 6, dans lequel l'architecture de commande comprend au moins une unité (6) de commande de frein, dans lequel le stade b) comprend alimenter une première unité de commande de frein de la au moins une unité de commande de frein en puissance provenant de la deuxième des au moins deux unités d'alimentation en énergie.

8. Procédé suivant la revendication 7, dans lequel, dans le stade d), la première unité de commande de frein commande l'actionnement du premier actionneur de frein et/ou du deuxième actionneur de frein pour effectuer la fonction de direction.
